# EUROPÄISCHE PATENTSCHRIFT

(11) **EP 1 407 487 B1**
(45) Veröffentlichungstag und Bekanntmachung des Hinweises auf die Patenterteilung: **29.12.2004**
(21) Anmeldenummer: 02754349.5
(22) Anmeldetag: 11.07.2002
(51) Int. Cl.: H01L 21/58, H01L 21/20, C03B 8/02, C23C 18/12

(54) **SOLLÖSUNG ZUR HERSTELLUNG VON GLASBESCHICHTUNGEN FÜR ELEKTRISCH LEITENDE, ZUM ANODISCHEN BONDEN EINSETZBARE MATERIALIEN**
SOL SOLUTION FOR PRODUCING GLASS COATINGS FOR ELECTRICALLY CONDUCTIVE MATERIALS THAT CAN BE USED IN ANODIC BONDING
SOLUTION SOL PERMETTANT DE PRODUIRE DES REVETEMENTS EN VERRE POUR DES MATERIAUX ELECTROCONDUCTEURS POUVANT ETRE UTILISES POUR REALISER UNE LIAISON ANODIQUE

(30) Priorität: 18.07.2001 DE 10134892; 28.02.2002 DE 10208782
(43) Veröffentlichungstag der Anmeldung: 14.04.2004
(73) Patentinhaber: FRAUNHOFER-GESELLSCHAFT ZUR FÖRDERUNG DER ANGEWANDTEN FORSCHUNG E.V., 80636 München (DE)
(72) Erfinder: QUENZER, Hans, Joachim, 25524 Itzehoe (DE); SCHULZ, Arne, Veit, 22457 Hamburg (DE)
(74) Vertreter: Gagel, Roland, Dr.
(86) Internationale Anmeldenummer: PCT/DE2002/002541
(87) Internationale Veröffentlichungsnummer: WO 2003/009369

(56) Entgegenhaltungen:
- DE-A- 19 603 023
- US-A- 4 851 150
- QUENZER H J ET AL: "Anodic-bonding on glass layers prepared by a spin-on glass process: preparation process and experimental results" TRANSDUCERS '01. EUROSENSORS XV. 11TH INTERNATIONAL CONFERENCE ON SOLID-STATE SENSORS AND ACTUATORS. DIGEST OF TECHNICAL PAPERS, PROCEEDINGS OF 11TH INTERNATIONAL CONFERENCE ON SOLID STATE SENSORS AND ACTUATORS TRANSDUCERS '01/EUROSENSORS XV, MUNICH,, Seiten 230-233 vol.1, XP002221464 2001, Berlin, Germany, Springer-Verlag, Germany ISBN: 3-540-42150-5
- QUENZER H J ET AL: "SILICON - SILICON ANODIC-BONDING WITH INTERMEDIATE GLASS LAYERS USING SPIN- ON GLASSES" PROCEEDINGS OF THE 9TH. ANNUAL INTERNATIONAL WORKSHOP ON MICRO ELECTROMECHANICAL SYSTEMS. INVESTIGATION OF MICRO STRUCTURES, SENSORS, ACTUATORS, MACHINES AND SYSTEMS. SAN DIEGO, FEB. 11 - 15, 1996, PROCEEDINGS OF THE ANNUAL INTERNATIONAL WORKSHOP ON , Bd. WORKSHOP 9, 11. Februar 1996 (1996-02-11), Seiten 272-276, XP000689288 ISBN: 0-7803-2986-4
- DATABASE INSPEC [Online] INSTITUTE OF ELECTRICAL ENGINEERS, STEVENAGE, GB; KLEIN L C ET AL: "Kinetics of the sol/gel transition" Database accession no. 1563316 XP002221465 & PROCEEDINGS OF THE XIITH INTERNATIONAL CONGRESS ON GLASS, ALBUQUERQUE, NM, USA, 6-11 JULY 1980, Bd. 38-39, pt.1, Seiten 45-50, Journal of Non-Crystalline Solids, May-June 1980, Netherlands ISSN: 0022-3093

## Beschreibung

### Technisches Anwendungsgebiet

Die Erfindung bezieht sich auf eine Sollösung zur Herstellung von Glasbeschichtungen für elektrisch leitende, zum anodischen Bonden einsetzbare Materialien. Ferner bezieht sich die Erfindung auf ein Verfahren zur Herstellung einer als Beschichtungsmittel dienenden Sollösung sowie deren Verwendung.

### Stand der Technik

Unter dem anodischen Bonden versteht man ein Verfahren, um eine Verbindung zwischen alkalihaltigem Glas und elektrisch leitendem Material herzustellen. Derartige Verbindungen eignen sich insbesondere, um zwei Halbleiterelemente, bspw. zwei Siliziumwafer, flächig mit einer dazwischen liegenden alkalihaltigen Glasschicht zu verbinden. Typischerweise wird hierbei bei einer Prozesstemperatur von 300 - 420° C zwischen einem ionenleitenden Glas und dem Siliziumwafer eine elektrische Spannung angelegt. Diese elektrische Spannung verursacht an der Grenzschicht zwischen Glas und Halbleiter elektrochemische Reaktionen, durch die das Glas mit dem Halbleiter fest verbunden wird. Das Ergebnis dieses Prozesses ist eine unlösbare Verbindung zwischen dem alkalihaltigen Glas und dem Halbleitermaterial. Für das anodische Bonden von Siliziumwafern sind insbesondere Borosilikatgläser mit variablem Gehalt an B₂O₃, SiO₂ und/oder Al₂O₃ geeignet. Derartige Borosilikatgläser zeichnen sich durch eine gute chemische Beständigkeit sowie einen geringen Ausdehnungskoeffizienten aus.

Die zum anodischen Bonden nötigen Glasschichten werden üblicherweise mit molekularen Beschichtungsverfahren, wie etwa Sputtern oder Aufdampfen oder durch Beschichtung mit entsprechenden Sollösungen hergestellt. Bei größeren Schichtdicken, wie sie insbesondere zur Verbindung zweier Siliziumwafer benötigt werden, ergeben sich bei Einsatz von molekularen Beschichtungsverfahren Prozesszeiten von einigen Stunden. Darüber hinaus ist die Herstellung solcher Schichten in Sputter- oder Aufdampfanlagen immer mit der Ausbildung eben solcher dicker Beläge innerhalb der Geräte verbunden. Diese Beläge müssen von Zeit zu Zeit entfernt werden, was zu häufigen Wartungsund Reinigungsarbeiten führt. Dies ist auch der Grund dafür, dass das Auftragen von Glasschichten mittels molekularer Beschichtungsverfahren wie Sputtern oder Aufdampfen für das anodische Bonden mit Glaszwischenschichten teuer und unrentabel ist.

Demgegenüber stellen Beschichtungsverfahren, bei denen entsprechende Glasbeschichtungen durch Aufschleudern oder Tauchen unter Einsatz entsprechender Sollösungen hergestellt werden, sehr wirtschaftliche Verfahren dar, da die hierzu verwendeten Geräte wenig störanfällig und preiswert sind. Für diese Verfahren werden üblicherweise Sol-Gel-Beschichtungen auf der Basis von TEOS (Tetraethylorthosilikat) verwendet. Bei Verwendung dieser Beschichtungsverfahren zum Erstellen dicker Glasschichten erbeben sich allerdings andere, die Eigenschaften der Glasschicht betreffende Nachteile. So treten bei Schichtdicken, die für das anodische Bonden zweier Halbleiterplatten erforderlich sind, innerhalb der Schichten mechanische Spannungen auf, die zur Ausbildung von Rissen führen können. Aus diesem Grund können die üblicherweise verwendeten Sol-Gel-Beschichtungen auf der Basis von TEOS (Tetraethylorthosilikat) für die Herstellung von Schichtdicken, die 100 nm überschreiten, nicht verwendet werden.

Um das Auftreten solcher Spannungen zu verhindern, werden daher zur Erzeugung dicker Glasschichten zum anodischen Bonden mehrere Schichten übereinander aufgetragen. Allerdings lassen sich auch durch mehrfaches Aufbringen und Ausheizen der Schichten in der Regel Schichtstärken von 1000 - 1500 nm nicht überschreiten. Darüber hinaus hat sich gezeigt, dass die erreichbare Schichtqualität, insbesondere was die Defektfreiheit der Schicht angeht, mit der zunehmenden Anzahl aufgebrachter Schichten zu einem immer größeren Problem wird. Daher muss die nötige Anzahl der erforderlichen Beschichtungsvorgänge so gering wie möglich gehalten werden.

So wird in der DE 196 03 023 A1 ein Verfahren zum anodischen Bonden sowie eine Methode zum Herstellen von Glasschichten zum Zwecke des anodischen Bondens und hierfür geeigneter Sollösungen beschrieben. Das beschriebene Verfahren eignet sich insbesondere zum anodischen Bonden mit Glasschichten mit einer Dicke größer 100 nm bis zu 30 µm, die ebenfalls zum Verbinden von zwei Halbleiterschichten eingesetzt werden. Zur Herstellung der entsprechenden Sollösung wird ein SiO₂-Sol in mindestens einem oder einer Mischung aus n-Alkanolen, wobei n einen Wert von 1 - 5 annehmen kann, gelöst. Diesem Organosol wird anschließend Tetraethylorthosilikat (TEOS) oder Methyltriethoxysilan (MTEOS) und Wasser zugesetzt. Anschließend wird diesem Sol im sauren Milieu eine alkoholische Alkalisalzlösung zugesetzt.

Bei den hierfür verwendeten Alkalisalzen handelt es sich in der Regel um Salze der Essigsäure. Nachteilig hierbei ist, dass sich durch den Einsatz von Essigsäure die Standzeit der Lösung stark reduziert. Versuche haben unter dessen gezeigt, dass die mit den entsprechenden Salzen versetzten Lösungen höchstens 30 Minuten verwendungsfähig sind. Eine Möglichkeit die Standzeit entsprechender Lösungen zu verlängern, bietet der Einsatz von Salzen, die in Alkoholen gut löslich sind, wie etwa Nitrate. Die Verwendung solcher Salze führt allerdings bei der Herstellung von Glasschichten zur Bildung von feinen Salzpartikeln auf der Oberfläche. Um eine solche Bildung kleiner Salzpartikel auf der Oberfläche der Glasschicht zu verhindern, wäre der Einsatz von Acetaten denkbar. Im Hinblick auf die erreichbaren pH-Werte erwies sich allerdings der Einsatz der Acetate in diesem Fall für nicht sinnvoll.

Ähnliche Sollösungen, wobei das Alkalimetall als K2O, bzw. KOH-Lösung anwesend ist, werden beschrieben in QUENZER H J ET AL: 'Anodic-bonding on glass layers prepared by a spin-on glass process: preparation process and experimental results' TRANSDUCERS '01. EUROSENSORS XV. 11TH INTERNATIONAL CONFERENCE ON SOLID-STATE SENSORS AND ACTUATORS. DIGEST OF TECHNICAL PAPERS, PROCEEDINGS OF 11TH INTERNATIONAL CONFERENCE ON SOLID STATE SENSORS AND ACTUATORS TRANSDUCERS'01/EUROSENSORS XV, MUNICH Seiten 230-233 vol.1, 2001, Berlin, Germany, Springer-Verlag, Germany ISBN: 3-540-42150-5, und QUENZER H J ET AL: 'SILICON - SILICON ANODIC-BONDING WITH INTERMEDIATE GLASS LAYERS USING SPIN- ON GLASSES' PROCEEDINGS OF THE 9TH. ANNUAL INTERNATIONAL WORKSHOP ON MICRO ELECTROMECHANICAL SYSTEMS. INVESTIGATION OF MICRO STRUCTURES, SENSORS, ACTUATORS, MACHINES AND SYSTEMS. SAN DIEGO, FEB. 11 - 15, 1996, PROCEEDINGS OF THE ANNUAL INTERNATIONAL WORKSHOP ON , Bd. WORKSHOP 9, 11. Februar 1996, Seiten 272-276, ISBN: 0-7803-2986-4.

Zusammenfassend lässt sich feststellen, dass zur Herstellung von Glasschichten mit einer Dicke zwischen 0,5 und 30 µm (die typische Schichtdicke beträgt 4 - 5 µm), wie sie bspw. für das anodische Bonden zweier Halbleiterplatten benötigt werden, prinzipiell zwei Verfahrenstypen bekannt sind. Hierbei sind die molekularen Auftragungsverfahren wie Sputtern oder Aufdampfen ungeeignet, da sie sehr teuer und mit großem Wartungs- und Reinigungsaufwand verbunden sind, während die preiswerten Verfahren, bei denen geeignete Sollösungen bspw. durch Aufschleudern oder Tauchen aufgetragen werden, Mängel bezüglich der erzielbaren Schichtdicke sowie der Qualität der Schichten aufweisen.

Aufgabe der vorliegenden Erfindung ist es daher, eine geeignete Sollösung anzugeben, die eine wesentlich verbesserte Standzeit von einigen Tagen bis Wochen garantiert. Mit Hilfe dieser Lösung soll es ferner möglich sein alkalihaltige Glasbeschichtungen für elektrisch leitende, zum anodischen Bonden einsetzbare Materialien mit einer Dicke zwischen 500 nm und 30 µm kostengünstig herzustellen.

### Darstellung der Erfindung

Die Lösung der der Erfindung zu Grunde liegenden Aufgabe ist im Anspruch 1 angegeben. Außerdem wird im Anspruch 6 ein Verfahren zur Herstellung einer als Beschichtungsmittel dienenden Sollösung sowie im Anspruch 18 die Verwendung der erfindungsgemäßen Sollösung angegeben. Vorteilhafte Weiterbildungen des Erfindungsgedankens sind Gegenstand der Unteransprüche sowie aus dem nachfolgenden Beschreibungstext unter Bezugnahme auf die Ausführungsbeispiele zu entnehmen.

Erfindungsgemäß ist eine Sollösung zur Herstellung von Glasbeschichtungen für elektrisch leitende, zum anodischen Bonden einsetzbare Materialien, die ein Gemisch aus einem Organosol, bestehend aus SiO₂ gelöst in mindestens einem oder einer Mischung aus mehreren n-Alkanolen, einem Tetraethylorthosilikat (TEOS) und/oder einem Triethoxy- oder Trimethoxysilan sowie einer Säure oder Base und Wasser ist und das Gemisch wenigstens teilweise polymerisiert ist. Die Sollösung zeichnet sich dadurch aus, dass ein Alkalialkoholat in dem Gemisch enthalten ist.

Hierbei können für die Herstellung der Sollösung die Triethoxysilane Ethyltriethoxysilan, Methyltriethoxysilan oder Vinyltriethoxysilan verwendet werden. Alternativ zu den Ethoxysilanen können auch die entsprechenden Methoxysilane eingesetzt werden

Zur Herstellung dieser Sollösung wird zuerst ein SiO₂-Sol in wenigstens einem oder auch in einer Mischung aus mehreren n-Alkanolen hergestellt, wobei n hierbei einen Wert zwischen 1 und 10 annehmen kann. Diesem Organosol wird Tetraethylorthosilikat und/oder ein Triethoxysilan zugesetzt. Bei dem zugesetzten Triethoxysilan kann es sich um Ethyltriethoxysilan, Methyltriethoxysilan, Vinyltriethoxysilan oder die entsprechenden Methoxysilane handeln. Das entstehende Gemisch kann entweder in einem sauren Milieu bei pH 2 - 3 polymerisiert werden oder im basischen bei pH 9 - 11. Dazu wird entweder Wasser dem Gemisch zugesetzt und eine kleine Menge Säure dazugegeben oder es wird bereits vor der Zugabe des Wassers eine Base, wie z. B. eine Alkalialkoholat zugesetzt. In beiden Fällen wird die Lösung über eine längere Zeit polymerisiert (Polykondensation). Die Reaktion der Komponenten kann hierbei durch ein gelindes Erwärmen unterstützt werden. Wird bereits bei diesem Verfahrensschritt ein Alkalialkoholat dem Gemisch zugesetzt, bietet es sich an, den später im Glas benötigten Alkaligehalt durch die entsprechende Menge des Alkoholats einzustellen.

Wird die Polymerisation hingegen zunächst im sauren pH-Bereich durchgeführt, so kann anschließend die für die erforderliche Glaszusammensetzung gewünschte Menge Alkalioxide in Form eines Alkalialkoholats, vorzugsweise eines Ethylats, zugegeben werden. Weiterhin kann ein Teil des Gemisches TEOS/MTEOS wiederum zugesetzt und unter Umständen auch noch mit Wasser versetzt werden.

Es ist auch möglich, dass sowohl die Säure als auch das Alkalialkoholat bereits in einem n-Alkanol, wobei n einen Wert zwischen 1 und 10 annehmen kann, gelöst ist.

Die erfindungsgemäße Sollösung ist eine fast klare, opaleszierende Lösung, die sehr gut zum Beschichten geeignet ist. Die erhaltene Lösung, die eine Standzeit von einigen Tagen bis Wochen garantiert, kann anschließend aufkonzentriert werden und steht somit nach einer Filtration zum Einsatz für Beschichtungszwecke zur Verfügung.

Nach einer erfolgten Aufkonzentration und Filtration kann die erfindungsgemäße Sollösung auf das zu beschichtende Teil in ansonsten bekannter Weise, bspw. durch Tauchen, Aufschleudern oder Sprühen aufgetragen werden. Diese Beschichtung wird getrocknet und bei einer Temperatur ausgeheizt (getempert), die je nach den gewünschten Eigenschaften der Glasschicht gewählt wird. Bei einmaligem Durchführen dieses Verfahrens lassen sich Schichtstärken von 1 - 2 µm erzielen. Um größere Schichtdicken, bspw. 2 - 30 µm erreichen zu können, kann dieses Verfahren mehrfach wiederholt werden, wobei zwischen den einzelnen Beschichtungsschritten jeweils die neu aufgetragene Schicht getrocknet und getempert werden muss.

Die auf diese Weise erzeugte alkalihaltige Glasschicht ist weitgehend frei von Rissen und eignet sich sehr gut zum anodischen Bonden. Somit lassen sich auch zwei flächige Substrate aus elektrisch leitenden Material, wie bspw. zwei Siliziumwafer, durch eine mit der erfindungsgemäßen Sollösung hergestellte Glasschicht fest und unlösbar miteinander verbinden. Ein weiterer Vorteil der erfindungsgemäßen Sollösung besteht darin, dass die Konzentration der Alkaliionen in der fertigen Glasschicht durch den Zuschlag unterschiedlicher Mengen an Alkoholaten zu der erfindungsgemäßen Sollösung eingestellt werden kann.

Die Konzentration der jeweiligen Sollösung beeinflusst die zu erstellende Dicke der Glasschicht. Sofern mit einem Beschichtungsschritt eine dünne Glasschicht erzeugt werden soll, kann die Sollösung vor der Beschichtung mit n-Alkanolen, wobei n wiederum einen Wert zwischen 1 bis 10 annehmen kann, verdünnt werden. Wird die Sollösung hingegen eingeengt, ist es möglich, die Schichtdicke der Einzelbeschichtung zu erhöhen. Vorteilhafterweise wird zu einer Verdünnung dasjenige n-Alkanol verwendet, das Lösungsmittel der Sollösung ist.

Darüber hinaus werden die Eigenschaften der fertigen Glasschicht sehr stark durch die Temperatur beeinflusst, bei der die aufgetragene und getrocknete Sollösung ausgeheizt (getempert) wird. Wird bei einer Temperatur unterhalb 400° C getempert, so verbleibt in dem fertigen Glas ein großer Anteil organischen Materials, z. B. Methylgruppen. In diesem Fall handelt es sich bei dem fertigen Glas um organisch modifizierte Silikate mit zusätzlichen Alkaliionen.

Wird die Glasschicht hingegen bei Temperaturen oberhalb 450° C getempert, so wird die Glasschicht verdichtet. Eine solche Temperung kann bspw. an Luft oder Sauerstoff erfolgen.

Wird die Temperung bei Temperaturen oberhalb 650° C durchgeführt, so wird eine sehr dichte Glasschicht erzeugt, die einen Alkaligehalt, bspw. Na₂O-Gehalt, besitzt, der durch Zugabe entsprechender Mengen Alkalialkoholate zu der Sollösung sehr genau vorherbestimmt werden kann. Derartig dichte Glasschichten zeichnen sich durch ihre sehr hohe Zugfestigkeit aus und sind selbst gegen alkalisches Ätzen resistent.

Ein anodisches Bonden ist insbesondere mit Glasschichten, die bei Temperaturen von mindestens 550° C getempert wurden, sehr gut möglich.

Durch Zugabe weiterer chemischer Verbindungen zu der erfindungsgemäßen Sollösung können Verbesserungen bzw. Änderungen der Eigenschaften der durch die erfindungsgemäße Verwendung der Sollösung erzeugte Glasschicht erzielt werden. So können bspw. zur Verbesserung der chemischen Beständigkeit und zur Anpassung des Ausdehnungskoeffizienten der Glasschicht an die zu bondenden Materialien Borverbindungen wie Borsäure und/oder organische Aluminiumverbindungen der Sollösung zugegeben werden. Dies ist möglich, da durch Zugabe dieser Stoffe die für das anodische Bonden funktionell wichtigen Eigenschaften der fertigen Glasschicht nicht beeinträchtigt werden.

Darüber hinaus hat sich gezeigt, dass für die Herstellung der Sollösung an Stelle von Methyltriethoxysilan (MTEOS) auch Ethyltriethoxysilan (ETEOS) oder Vinyltriethoxysilan (VTEOS) verwendet werden kann. Prinzipiell können an Stelle der entsprechenden Ethoxysilanen auch die Methoxysilane verwendet werden.

### Kurze Beschreibung der Erfindung

Die Erfindung wird nachstehend ohne Beschränkung des allgemeinen Erfindungsgedankens anhand einiger bevorzugter und besonders einfacher Ausführungsformen der Erfindung beispielhaft dargestellt.

### Beispiel 1:

Ausgehend von einer wässrigen Lösung von Siliziumdioxid-Partikeln mit einem durchschnittlichen Durchmesser von 7 nm wird ein ethanolisches Alkoholsol hergestellt. Zu 120 g dieses Alkoholsols, dessen pH-Wert bei 2 liegt, werden 35,6 g Methyltriethoxysilan und 11,5 g Tetraethylorthosilikat hinzugegeben. Anschließend werden 9 g Wasser unter ständigem Rühren zugegeben. Anschließend wird diese Mischung für 3 Stunden auf 22° C temperiert.

Im Anschluss an diese Verfahrensschritte wird dieses Sol mit einem Alkoholat, vorzugsweise Kaliumethylat, versetzt. Dazu werden 3 g Kaliumethylat zum Sol hinzugegeben und nach einer kurzen Reaktionszeit mit 0,1 - 0,2 g Wasser versetzt. Das Ganze Gemisch wird anschließend bei 40° C für weitere 2 Stunden temperiert.

Vor Verwendung dieser Sollösung zur Herstellung von Glasbeschichtungen für elektrisch leitende, zum anodischen Bonden einsetzbare Materialien wird die Sollösung aufkonzentriert und filtriert.

Anschließend wird die mit der Sollösung erzeugte Beschichtung bei Temperaturen oberhalb 450° C getempert, was eine weitere Verdichtung der Glasschicht bewirkt. Die Temperung führt zu einer weiteren Verdichtung der Glasschicht. In diesem Fall erhält man eine Glasschicht, die einen relativ großen Anteil organischen Materials, hier Methylgruppen, enthält.

### Beispiel 2:

Das hier beschriebene Verfahren stellt ein alternatives Verfahren zu dem im Beispiel 1 genannten dar. Zunächst wird mittels einer wässrigen Lösung von Siliziumdioxid-Partikeln mit einem durchschnittlichen Durchmesser von 7 nm und Ethanol ein Alkoholsol hergestellt. Zu 120 g dieses Alkoholsols werden 35,6 g Methyltriethoxysilan und 11,5 g Tetraethylorthosilikat zugegeben. Anschließend werden 3 g Kaliumethylat zu dem Sol hinzugegeben und nach einer kurzen Reaktionszeit mit 4 - 6 g Wasser versetzt. Dieses Gemisch wird anschließend bei ca. 40° C für weitere 2 Stunden temperiert. Die Polykondensation der einzelnen Komponenten erfolgt hier bei einem pH-Wert zwischen 9 - 12. Gegebenenfalls kann eine kleine Menge einer Säure, bspw. Essigsäure, zugesetzt werden, um den pH-Wert einzustellen und zu verhindern, dass der pH-Wert zu hoch wird.

Vor Aufbringen dieser Sollösung auf elektronenleitendes Material wird die Sollösung zunächst aufkonzentriert und filtriert. Anschließend wird die Beschichtung getrocknet und schließlich bei einer Temperatur von 600 - 650° C getempert, um so eine sehr dichte Glasschicht zu erhalten.

## Patentansprüche

1. Sollösung zur Herstellung von Glasbeschichtungen für elektrisch leitende, zum anodischen Bonden einsetzbare Materialien, die ein Gemisch aus einem Organosol, bestehend aus SiO₂ gelöst in mindestens einem oder einer Mischung aus mehreren n-Alkanolen, einem Tetraethylorthosilikat (TEOS) und/oder einem Triethoxy- oder Trimethoxysilan sowie einer Säure oder Base und Wasser ist, wobei das Gemisch wenigstens teilweise polymerisiert ist,
**dadurch gekennzeichnet, dass** ein Alkalialkoholat in dem Gemisch enthalten ist.

2. Sollösung nach Anspruch 1,
**dadurch gekennzeichnet, dass** das Triethoxysilan ein Ethyltriethoxysilan, Methyltriethoxysilan oder Vinyltriethoxysilan ist.

3. Sollösung nach Anspruch 1,
**dadurch gekennzeichnet, dass** das Trimethoxysilan Ethyltrimethoxysilan, Methyltrimethoxysilan oder Vinyltrimethoxysilan ist.

4. Sollösung nach einem der Ansprüche 1 bis 3,
**dadurch gekennzeichnet, dass** bei dem n-Alkanol n einen Wert zwischen 1 und 10 annimmt.

5. Sollösung nach einem der Ansprüche 1 bis 4,
**dadurch gekennzeichnet, dass** die Sollösung zusätzlich Borsäure und/oder organische Aluminiumverbindungen enthält.

6. Verfahren zur Herstellung einer als Beschichtungsmittel dienenden Sollösung, zur Herstellung von Glasbeschichtungen für elektrisch leitende, zum anodischen Bonden einsetzbare Materialien, **gekennzeichnet durch** die Verfahrensschritte:
- Herstellen eines Organosols **durch** die Lösung von SiO₂-Sol in wenigstens einem oder auch in einer Mischung aus n-Alkanolen,
- Erzeugung eines Gemisches, indem dem Organosol Tetraethylorthosilikat (TEOS) und/oder Triethoxyoder Trimethoxysilan zugesetzt wird,
- Zusetzen eines Alkalialkoholats,
- Polymerisation.

7. Verfahren nach Anspruch 6,
**dadurch gekennzeichnet, dass** als Triethoxysilan Ethyltriethoxysilan, Methyltriethoxysilan oder Vinyltriethoxysilan verwendet wird.

8. Verfahren nach Anspruch 6,
**dadurch gekennzeichnet, dass** als Trimethoxysilan Ethyltrimethoxysilan, Methyltrimethoxysilan oder Vinyltrimethoxysilan verwendet wird.

9. Verfahren nach einem der Ansprüche 6 bis 8,
**dadurch gekennzeichnet, dass** ein Alkanol verwendet wird, bei dem n einen Wert zwischen 1 und 10 annimmt.

10. Verfahren nach einem der Ansprüche 6 bis 9,
**dadurch gekennzeichnet, dass** während der Polymerisation eine Wärmezufuhr erfolgt.

11. Verfahren nach einem der Ansprüchw 6 bis 10,
**dadurch gekennzeichnet, dass** durch Zusetzen einer geeigneten Menge des Alkalialkoholats ein gewünschter Alkaligehalt eingestellt wird.

12. Verfahren nach einem der Ansprüche 6 bis 11,
**dadurch gekennzeichnet, dass** als Alkalialkoholat ein Ethanolat verwendet wird.

13. Verfahren nach einem der Ansprüche 6 bis 12,
**dadurch gekennzeichnet, dass** die Polymerisation, durch die Zugabe von Wasser und einer Säure zu dem Gemisch, in einem sauren Milieu durchgeführt wird.

14. Verfahren nach Anspruch 13,
**dadurch gekennzeichnet, dass** die Säure derart zudosiert wird, dass das saure Milieu einen ph-Wert von 2 bis 3 aufweist.

15. Verfahren nach Anspruch 13 oder 14,
**dadurch gekennzeichnet, dass** nach dem Zusetzen des Alkalialkoholats Tetraethylorthosilikat (TEOS) und/oder Methyltriethoxysilan (MTEOS) zugesetzt wird.

16. Verfahren nach Anspruch 13 oder 14,
**dadurch gekennzeichnet, dass** nach dem Zusetzen des Alkalialkoholats Tetraethylorthosilikat (TEOS) und/oder Methyltriethoxysilan (MTEOS) und Wasser zugesetzt wird.

17. Verfahren nach einem der Ansprüche 6 bis 12,
**dadurch gekennzeichnet, dass** die Polymerisation, durch die Zugabe von Wasser und einer Base zu dem Gemisch, in einem alkalischen Milieu durchgeführt wird.

18. Verfahren nach Anspruch 17,
**dadurch gekennzeichnet, dass** die Base derart zudosiert wird, dass das alkalische Milieu einen ph-Wert von 9 bis 11 aufweist.

19. Verfahren nach Anspruch 17 oder 18,
**dadurch gekennzeichnet, dass** ein Alkalialkoholat als Base genutzt wird.

20. Verwendung der Sollösung nach einem der Ansprüche 1 bis 5 zum Erzeugen einer Beschichtung durch Auftragen auf ein Substrat mittels Tauchen, Aufschleudern und/oder Sprühen.

21. Verwendung nach Anspruch 20,
**dadurch gekennzeichnet, dass** die Beschichtung getrocknet und ausgeheizt (getempert) wird.

22. Verwendung nach Anspruch 21,
**dadurch gekennzeichnet, dass** die Beschichtung bei bis zu 400°C ausgeheizt wird.

23. Verwendung nach Anspruch 21,
**dadurch gekennzeichnet, dass** die Beschichtung bei mehr als 450°C an Luft oder Sauerstoff ausgeheizt wird.

24. Verwendung nach Anspruch 21,
**dadurch gekennzeichnet, dass** die Beschichtung bei mehr als 650°C ausgeheizt wird.

25. Verwendung nach einem der Ansprüche 20 bis 24,
**dadurch gekennzeichnet, dass** Beschichtungen mit einer Dicke von 500nm bis 30µm erzeugt werden.

26. Verwendung nach einem der Ansprüche 20 bis 25,
**dadurch gekennzeichnet, dass** für das Erzeugen von Beschichtungen, die Dicken größer als 2µm aufweisen, die Sollösung mehrfach auf das Substrat aufgetragen, getrocknet und getempert wird.

27. Verwendung nach einem der Ansprüche 20 bis 26,
**dadurch gekennzeichnet, dass** die Beschichtung eine alkalihaltige Glasschicht ist, die auf ein elektrisch leitfähiges Substrat aufgebracht wird.

28. Verwendung nach Anspruch 27,
**dadurch gekennzeichnet, dass** die Glasschicht als Zwischenschicht zum Verbinden mittels anodischem Bonden zweier elektrisch leitfähiger, flächiger Substrate eingesetzt wird.

## Claims

1. A sol solution for producing glass coatings for electrically conductive materials that can be used in anodic bonding, said sol solution being a mix of an organosol consisting of SiO₂ dissolved in at least one n-alkanol or a mixture of a multiplicity of n-alkanols, a tetraethyl orthosilicate (TEOS) and/or a triethoxy silane or a trimethoxy silane as well as an acid or a base and water, with the mixture being partially polymerized,
**characterized in that** said mix contains an alkali alcoholate.

2. A sol solution according to claim 1,
**characterized in that** said triethoxy silane is an ethyltriethoxy silane, a methyltriethoxy silane or a vinyl triethoxy silane.

3. A sol solution according to claim 1,
**characterized in that** said trimethoxy silane is ethyltrimethoxy silane, methyltrimethoxy silane or vinyltrimethoxy silane.

4. A sol solution according to one of the claims 1 to 3,
**characterized in that** in said n-alkanol, n assumes a value between 1 and 10.

5. A sol solution according to one of the claims 1 to 4,
**characterized in that** said sol solution contains in addition boric acid and/or organic aluminum compounds.

6. A method for producing a sol solution, which acts as a coating agent, for producing glass coatings for electrically conductive materials which can be used in anodic bonding,
**characterized by** the following process steps:
- production of an organosol by dissolving a SiO₂ sol in at least one n-alkanol or in a mixture of n-alkanols,
- creation of a mix in which tetraethyl orthosilicate (TEOS) and/or triethoxy silane or trimethoxy silane are added to said organosol,
- addition of an alkali alkoholate,
- polymerization.

7. A method according to claim 6,
**characterized in that** ethyl triethoxy silane, methyl triethoxy silane or vinyl triethoxy silane are utilized as said triethoxy silane.

8. A methods according to claim 6,
**characterized in that** ethyl trimethoxy silane, methyl trimethoxy silane or vinyl trimethoxy silane are utilized as said trimethoxy silane.

9. A method according to one of the claims 6 to 8,
**characterized in that** an alkanol is utilized, in which n assumes a value between 1 and 10.

10. A methods according to one of the claims 6 to 9,
**characterized in that** during said polymerization heat is added.

11. A methods according to one of the claims 6 to 10,
**characterized in that** a desired alkali content is set by adding a suited amount of said alkali alcoholate.

12. A method according to one of the claims 6 to 11,
**characterized in that** an ethanolate is utilized as said alkali alcoholate.

13. A method according to one of the claims 6 to 12,
**characterized in that** by adding water and an acid to said mix, said polymerization is conducted in an acidic environment.

14. A method according to claim 13,
**characterized in that** said acid is dosed in such a manner that said acidic environment has a pH-value of 2 to 3.

15. A method according to claim 13 or 14,
**characterized in that** after said addition of said alkali alcoholate, tetraethyl orthosilicate (TEOS) and/or methyl triethoxy silane (MTEOS) are added.

16. A method according to claim 13 or 14,
**characterized in that** after said addition of said alkali alcoholate, tetraethyl orthosilicate (TEOS) and/or methyl triethoxy silane (MTEOS) and water are added.

17. A method according to one of the claims 6 to 12,
**characterized in that** by adding water and a base to said mix, said polymerization is conducted in an alkaline environment.

18. A method according to claim 17,
**characterized in that** said base is dosed in such a manner that said alkaline environment has a pH-value of 9 to 11.

19. A method according to claim 17 or 18,
**characterized in that** an alkali alcoholate is utilized as said base.

20. Use of the sol solution according to one of the claims 1 to 5 for producing a coating by application onto a substrate by means of immersion, spinning on and/or spraying.

21. The use according to claim 20
**characterized in that** said coating is dried and is tempered.

22. The use according to claim 21,
**characterized in that** said coating is tempered at up to 400°C.

23. The use according to claim 21,
**characterized in that** said coating is tempered in air or in oxygen at above 450°C.

24. The use according to claim 21,
**characterized in that** said coating is tempered at above 650°C.

25. The use according to one of the claims 20 to 24,
**characterized in that** coatings having a thickness of 500nm to 30µm are produced.

26. The use according to one of the claims 20 to 25,
**characterized in that** for producing coatings which have a thickness greater than 2µm, said sol solution is multiply applied, dried and tempered on said substrate.

27. The use according to one of the claims 20 to 26,
**characterized in that** said coating is an alkaline glass layer applied onto an electrically conductive substrate.

28. The use according to claim 27,
**characterized in that** said glass layer is utilized as an intermediate layer for bonding two electrically conductive, planar substrates by means of anodic bonding.

## Revendications

1. Solution de sol pour préparer des revêtements vitreux pour des matériaux électriquement conducteurs, que l'on peut mettre en oeuvre pour la soudure anodique, laquelle constitue un mélange d'un sol organique, constitué de SiO₂ dissous dans au moins n-alcalnol ou un mélange de plusieurs n-alcanols, d'un orthosilicate de tétraéthyle (TEOS) et/ou d'un triéthoxy- ou triméthoxy-silane, ainsi que d'un acide ou d'une base et d'eau, le mélange étant au moins partiellement polymérisé,
**caractérisée en ce qu'**un alcoolate de métal alcalin est contenu dans le mélange.

2. Solution de sol selon la revendication 1,
**caractérisée en ce que** le triéthoxysilane est un éthyltriéthoxysilane, un méthyltriéthoxysilane ou un vinyltriéthoxysilane.

3. Solution de sol selon la revendication 1,
**caractérisée en ce que** le triméthoxysilane est l'éthyltriméthoxysilane, le méthyltriméthoxysilane, ou le vinyltriméthoxysilane.

4. Solution de sol selon l'une quelconque des revendications 1 à 3,
**caractérisée en ce que** n prend une valeur comprise entre 1 et 10 pour le n-alcanol.

5. Solution de sol selon l'une quelconque des revendications 1 à 4,
**caractérisée en ce que** la solution de sol contient en outre l'acide borique et/ou des composés organiques de l'aluminium.

6. Procédé de préparation d'une solution de sol servant d'agent de revêtement pour préparer des revêtements vitreux destinés à des matériaux électriquement conducteurs pouvant être mis en oeuvre pour la soudure anodique, **caractérisé par** les étapes de procédé :
- préparation d'un sol organique par la dissolution de sol de SiO₂, dans au moins un n-alcanol, ou également dans un mélange de n-alcanols,
- production d'un mélange, en ajoutant l'orthosilicate de tétraéthyle (TEOS) et/ou le triéthoxy- ou triméthoxy-silane au sol organique,
- ajout d'un alcoolate de métal alcalin,
- polymérisation.

7. Procédé selon la revendication 6,
**caractérisé en ce que** l'éthyltriéthoxysilane, le méthyltriéthoxysilane ou le vinyltriéthoxysilane sont employés comme triéthoxysilane.

8. Procédé selon la revendication 6,
**caractérisé en ce que** l'éthyltriméthoxysilane, le méthyltriméthoxysilane, ou le vinyltriméthoxysilane sont employés comme triméthoxysilane.

9. Procédé selon l'une quelconque des revendications 6 à 8,
**caractérisé en ce qu'**un alcool est employé pour lequel n prend une valeur comprise entre 1 et 10.

10. Procédé selon l'une quelconque des revendications 6 à 9,
**caractérisé en ce qu'**un apport de chaleur est réalisé pendant la polymérisation.

11. Procédé selon l'une quelconque des revendications 6 à 10,
**caractérisé en ce qu'**une teneur souhaitée en métal alcalin est ajustée en ajoutant une quantité appropriée de l'alcoolate du métal alcalin.

12. Procédé selon l'une quelconque des revendications 6 à 11,
**caractérisé en ce qu'**un éthanolate est employé comme alcoolate de métal alcalin.

13. Procédé selon l'une quelconque des revendications 6 à 12,
**caractérisé en ce que** la polymérisation est réalisée dans un milieu acide en ajoutant de l'eau et un acide au mélange.

14. Procédé selon la revendication 13,
**caractérisé en ce que** l'acide est ajouté par doses de telle façon que le milieu acide présente une valeur de pH de 2 à 3.

15. Procédé selon la revendication 13 ou 14,
**caractérisé en ce que** de l'orthosilicate de tétraéthyle (TEOS) et/ou du méthyltriéthoxysilane (MTEOS) sont ajoutés après ajout de l'alcoolate de métal alcalin.

16. Procédé selon la revendication 13 ou 14,
**caractérisé en ce que** de l'orthosilicate de tétraéthyle (TEOS) et/ou du méthyltriéthoxysilane (MTEOS) et de l'eau sont ajoutés après ajout de l'alcoolate de métal alcalin.

17. Procédé selon l'une quelconque des revendications 6 à 12,
**caractérisé en ce que** la polymérisation est réalisée dans un milieu alcalin en ajoutant de l'eau et une base au mélange.

18. Procédé selon la revendication 17,
**caractérisé en ce que** la base est ajoutée par doses, de sorte que le milieu alcalin présente une valeur de pH de 9 à 11.

19. Procédé selon la revendication 17 ou 18,
**caractérisé en ce qu'**un alcoolate de métal alcalin est exploité comme base.

20. Utilisation de la solution de sol selon l'une quelconque des revendications 1 à 5 pour produire un revêtement par application sur un substrat au moyen d'un trempage, d'une projection et/ou d'une pulvérisation.

21. Procédé selon la revendication 20,
**caractérisé en ce que** le revêtement est séché et chauffé (attrempé).

22. Utilisation selon la revendication 21,
**caractérisée en ce que** le revêtement est chauffé jusqu'à une température de 400 °C.

23. Utilisation selon la revendication 21,
**caractérisée en ce que** le revêtement est chauffé à plus de 450 °C à l'air ou avec de l'oxygène.

24. Utilisation selon la revendication 21,
**caractérisée en ce que** le revêtement est chauffé à plus de 650 °C.

25. Utilisation selon l'une quelconque des revendications 20 à 24,
**caractérisée en ce que** les revêtements sont produits avec une épaisseur de 500 nm à 30 µm.

26. Utilisation selon l'une quelconque des revendications 20 à 25,
**caractérisée en ce que** la solution de sol est appliquée plusieurs fois sur le substrat, séchée et attrempée pour produire des revêtements qui présentent des épaisseurs supérieures à 2 µm.

27. Utilisation selon l'une quelconque des revendications 20 à 26,
**caractérisée en ce que** le revêtement constitue une couche vitreuse alcaline qui est appliquée sur un substrat capable de conduire l'électricité.

28. Utilisation selon la revendication 27,
**caractérisée en ce que** la couche vitreuse est mise en oeuvre comme couche intermédiaire pour lier deux substrats plans capables de conduire l'électricité au moyen d'une soudure anodique.
